# EUROPEAN PATENT SPECIFICATION

(11) **EP 1 163 633 B1**
(45) Date of publication and mention of the grant of the patent: **15.06.2005**
(21) Application number: 00906058.3
(22) Date of filing: 22.02.2000
(51) Int. Cl.: G06K 19/00, G07F 19/00, G06F 12/00

(54) **INTEGRATED POINT-OF-SALE AND INTERNET MULTI-APPLICATION SYSTEM AND METHOD OF USE THEREOF**
INTEGRIERTES VERKAUFSSTELLEN- UND INTERNET-VIELFACHANWENDUNGSSYSTEM UND VERFAHREN ZU DESSEN GEBRAUCH
SYSTEME MULTI-APPLICATION INTEGRE POUR POINT DE VENTE ET INTERNET ET PROCEDE D'UTILISATION D'UN TEL SYSTEME

(30) Priority: 22.02.1999 AU PP880199
(43) Date of publication of application: 19.12.2001
(73) Proprietor: Chip Application Technologies Limited, Surry Hills NSW 2010 (AU)
(72) Inventor: Mac.Smith, David, Chip Appl. Techn. Ltd., Surry Hills, NSW 2010 (AU); Garton, Ben, Chip Appl. Techn. Ltd., Surry Hills, NSW 2010 (AU); Wescombe, Justin, Chip Appl. Techn. Ltd., Surry Hills, NSW 2010 (AU)
(74) Representative: Neumann, Ernst Dieter, Dipl.-Ing.
(86) International application number: PCT/AU2000/000121
(87) International publication number: WO 2000/051074

(56) References cited:
- WO-A-97/45796
- WO-A-98/49658
- WO-A-99/52065
- US-A- 5 699 549

## Description

### FIELD OF THE INVENTION

The present invention relates to a Integrated Point-of-sale (POS) and internet Multi-Application System and Method of use thereof.

The invention is an improvement which adds further functionality to the system described in co-pending Australian provisional application No. PP2740 and WO 99/52065.

WO 99/52065 discloses a data carrying device having a memory space for storing data at a plurality of locations. The memory space includes a static area residing at a fixed location and two dynamically allocatable areas which can be defined within any portion ot the memory space by the static area. The dynamically allocatable areas allow different data carrying devices, having different amounts, configurations and available regions of memory space, to operate in one system. The system comprises at least one host and a plurality of terminals which are adapted to read from and write to the data carrying devices. Applications supported by the system are for example electronic payment systems, electronic tickets and/or access control.

From US 5 699 549 a memory card is known which is formatted so as to provide a first index area for storing a chapter attribute table and a second index area for storing a cluster table and a card management information. A defective block redundant area can be provided between the data area and the card management information area. By this means the memory card can be used as recording medium for all types of different information irrespective of the specific application field or the specific data type.

WO 98/49658 discloses an internet payment and loading system which uses a smart card for payment of goods or services purchased online over the internet. The system comprises a client terminal which interfaces with a card reader, a merchant server which advertises the goods offered by a merchant and a payment server on the internet including a computer and a securtiy module to handle transaction, data store and collection. The internet provides the routing functionality between the client terminal and the servers.

From WO 97/45796 an automated retail terminal is known in which a plurality of goods and/or services such as music services, vending, travel and entertainment, ticketing and/or financial services are provided in an integrated system. The system comprises identification means, for example in form of a smart card reader, and control means for communication with the retail terminal. One single identification allows access to all services provided by the retail terminal to the user.

The invention has been developed primarily for use as a smart-card system and will be described hereinafter with reference to this application. However, it will be appreciated that the invention is not limited to this particular field of use.

### BACKGROUND

Known smart-card implementations generally configure the card differently depending upon the particular functions they are to perform. Typically, the memory space of prior art smart-card systems contain various segments of fixed size, each of which are dedicated to the storage of a particular kind of data relating to a specific application/programme. Such utilization of the limited resources generally available in a smart-card results in limited overall functionality. For example, in the prior art, a 1 K card typically supports 1 , 2 or 3 predetermined and fixed applications/programmes.

It is known to format data on smart-cards such that each application resides in a separate directory, for example in accordance with International standard ISO 7816.

In practice however, it has been appreciated by the applicant that these formats are not suited for devices such as smart-cards if they are configured to support large numbers of applications and programmes because the amount of resources required to support the resulting elaborate application and directory structure is excessive.

Additionally, the differing formats adopted by different card providers for different applications or programmes seriously limits the inter-operability of present day smart-card systems. In other words, a smart-card supplied by a given card provider or card issuer for a particular programme and configured to fulfil a particular function, will generally not be compatible with the hardware and operating systems of different card providers, or hardware and operating systems designed to fulfil a different function, or the potential limitless number of different programmes or functions required by the many different card providers, card issuers or users of the different functions and programmes.

Known smart-card systems are typically custom made to support a small number of specific applications running under fixed constraints. Changes to the system usually require revision of the software and possibly the associated hardware, involving long lead times and substantial expense. The low number of applications/ programmes supported by each card and the lack of flexibility inherent in the current approach has seriously limited the functionality and interoperability of present day smart-card technology.

Further, known techniques for purchasing goods and services over the internet do not integrate seamlessly with the standard point of sale (POS) techniques. For example, in some circumstances, a trader may wish to provide a loyalty incentive program whereby the consumer is rewarded for a purchase of goods or services with, say, a discount on the next similar purchase. However, due to the lack of integration between the prior art techniques of internet commerce and POS commerce, there is a risk that a consumer who should receive a loyalty reward due to a purchase on a first medium, for example, the internet, will not automatically be credited with a loyalty reward when subsequently purchasing on a second medium, such as a POS terminal. It has been appreciated by the inventors of the present application that this failure often derives from the substantial lag time associated with reconciling the separate records of internet sales with the records of POS sales. This problem may be particularly acute when different merchants attempt cross-promotional exercises wherein a sale by a first merchant is rewarded by a second, separate merchant.

Due at least partially to the problems associated with integrating internet transactions and POS transactions, merchants have generally tended to trade either over the internet exclusively, or via POS transactions exclusively.

### SUMMARY OF THE INVENTION

It is an object of the present invention to overcome or ameliorate one or more of the disadvantages of the prior art, or at least to provide a useful alternative.

According to one aspect of the invention, there is provided a system for manipulating data on a plurality of data carrying devices, said system including at least one host and a plurality of terminals, each terminal being adapted to interact with said data carrying devices and to communicate with said host, characterized in that a first sub-set of said terminals are point of sale terminals and a second sub-set of said terminals are computing means interfacing to the internet for communication with an internet server which, in turn, is connected for communication with said host, said computing means reading from and writing to said data carrying devices, wherein the point of sale terminals and the computing means update data on the data carrying devices.

In this arrangement, the computing means and the internet server together perform an analogous function to that of the POS terminal. In other words, the computing means and internet server coexist in parallel with the POS terminals.

In one preferred embodiment, the computing means are in the form of any combination of the following: personal computers; personal digital assistants such as palmtop and handheld computers; mobile phones; or electronic information kiosks.

According to another aspect of the invention there is provided a method for manipulating data on a data carrying device which device includes one or more programs for a variety of applications said method characterized by the steps of:
a) inserting a data carrying device into one of a computing means and a point of sale terminal adapted to read from, and write to, said data carrying devices, said computing means being adapted to interface to the internet for communication with an internet server which, in turn, is connected for communication with a host; said point of sale terminal adapted to communicate with said host; performing steps b) through e) whenever said data carrying device is inserted in said computing means, and proceeding to step f) whenever said data carrying device is inserted in said point of sale terminal;
b) using said computing means to establish a connection with a merchant internet site;
c) if transaction enabling software is not already stored on the computing means, downloading said software across the internet;
d) using said computing means to select a good or service offered by said merchant; and
e) using said computing means to write updated data to at least one of said programs as appropriate for said transaction, thereby completing said method;
f) using said host and said point of sale terminal to write updated data to at least one of said programs as appropriate for point of sale transactions.

In a preferred embodiment the data carrying device includes one single or a combination of programs, wherein said programs being for an electronic purse or other payment system; loyalty; electronic tickets; memberships; and/or access control as applications.

Preferably the computing means communicates with an internet server upon which is stored terminal software which is activatable and configurable in response to parameter files sent from the host.

Preferably, step e) in the above method, when used with data carrying devices having loyalty programs, includes the following sub-steps:
e1) using said terminal software installed upon said internet server to check whether a loyalty reward is due in return for purchase of said good or service;
e2) updating loyalty data in a loyalty programme on said data carrying device if a loyalty reward is due.

Additional, or alternative, preferable sub-steps for step e) in the above method, when used with data carrying devices having an electronic pursue or other payment system program, are as follows:
e3) using said terminal software installed upon said internet server to check whether the payment system program has an amount of electronic representation of money required for the transaction; and
e4) deducting the required amount of electronic representation of money from the payment system program.

As used in this document, the term "data carrying device" includes chip bearing devices such as contact smart-cards, contactless smart-cards, dual interface (combi) smart-cards, watches, rings, key rings, implants, keys, mobile phones, personal data assistants (PDAs) and "virtual" storage devices such as electronic wallets, online databases and the like.

The preferred embodiment of the present invention allows numerous different applications to be implemented many times over. For example, any one data carrying device may, at any time, hold numerous different tickets for various unrelated services. Each implementation of an application is referred to in this document as a "programme".

The ability of the preferred embodiment of the present invention to integrate internet trade with standard point of sale commerce via common loyalty and other applications, compares favourably to the prior art.

### BRIEF DESCRIPTION OF THE DRAWINGS

A preferred embodiment of the invention will now be described, by way of example only, with reference to the accompanying drawings in which:
Figure 1 is a schematic view of a memory space;
Figure 2 is another schematic representation of a memory space showing a preferred relationship between the index area and the application area;
Figure 3 is a schematic diagram of a system;
Figure 4 is a schematic diagram of software included in at least some of the terminals;
Figure 5 is a schematic diagram of a first embodiment of a system according to the present invention; and
Figure 6 is a schematic diagram of a second embodiment of a system according to the present invention.

### PREFERRED EMBODIMENTS OF THE INVENTION

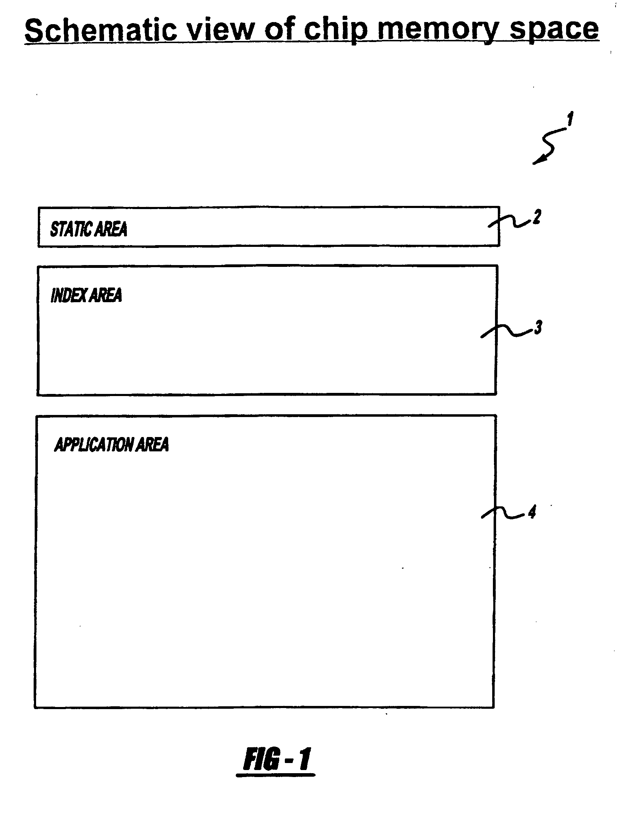

Referring Fig. 1 of to the drawings, the data carrying device (not shown) has a memory space 1 for storing data at a plurality of locations, said memory space including:
a static area 2 residing at a fixed location;
an index area 3 residing at a first dynamically allocatable location; and
an application area 4 residing at a second dynamically allocatable location.

The first and second dynamically allocatable locations allow the index area and application area to be defined within any portion of the memory space. Advantageously, this provides a security safeguard because memory spaces on different devices can be formatted differently such that a location corresponding to a given type of information on a first memory space will not necessarily correspond to a location of similar data in a second memory space. Additionally, the flexibility inherent in providing dynamically allocatable locations enables different data carrying devices, having different amounts, configurations and available regions of memory space, to operate efficiently within the one system. For example, the preferred embodiment allows for memory space to be reserved in a standard format on the majority of the popular, presently available smart-cards, despite differing memory capacities and memory location formats. In particular, the memory space can co-exist on and with numerous pre-existing third-party smart-card systems and pre-existing payment systems, such as Visa Cash^{(TM)}, Mondex^{(TM)}, Chipper^{(TM)}, debit, credit and cash, provided sufficient spare memory space is available on a smart-card. In other words, any device formatted in the above described manner can be used in any of the terminals of the preferred embodiment (unless such use is specifically prohibited by a rule defined by a parameter file).

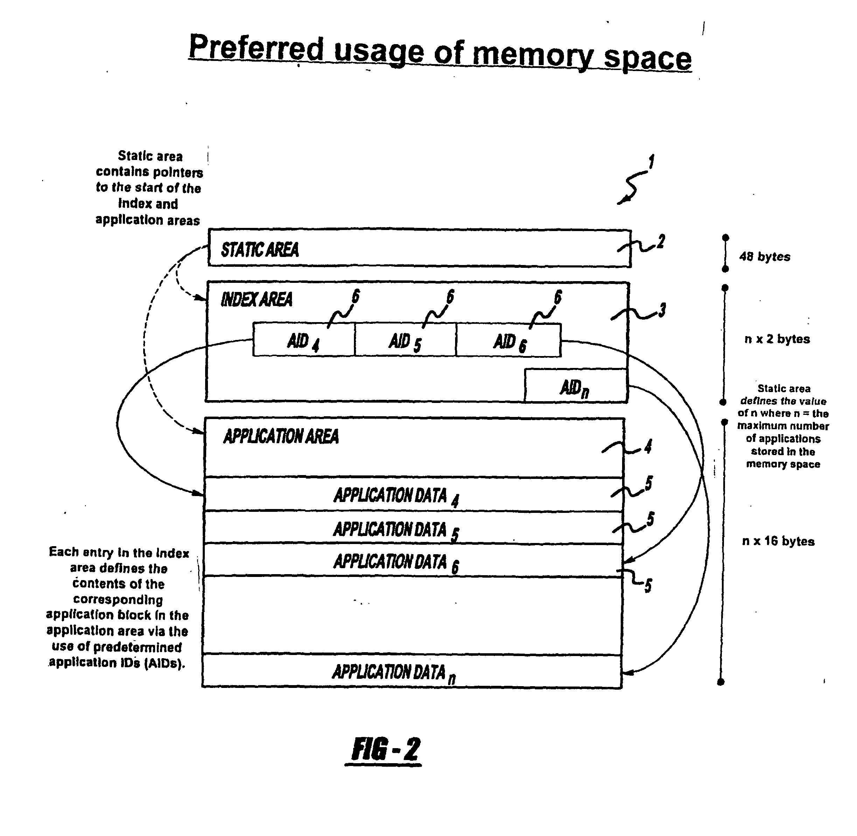

As shown in figure 2, the application area 4 is divided into a plurality of units 5, each being configurable to store data associated with part, or all of, a programme. The location of any unit. or units corresponding to any programme is dynamically allocatable. The size of a unit 5 is small compared to the size of the segments utilised in the prior art. For example, a prior art segment (which holds data corresponding to one application/programme only) may have a pre-defined size of, say, 500 bytes. However, if the actual memory space used by the application/programme is less than this fixed amount, say, 100 bytes, this arrangement results in significant wasted resources, in this example 400 bytes.

In contrast, the size of the units used in the preferred embodiment of the present invention is 16 bytes. Once a programme (ie the data relating to an application) has been written to the minimum number of units required, the next blank unit is then available for the writing of another programme because the location of any unit corresponding to any programme is dynamically allocatable. Hence, the amount of wasted resources lying between consecutive programme data can be arranged to never exceed 15 bytes. Therefore the present invention allows multiple programmes to be written to the application area in a far more memory space efficient manner by minimising wasted resources between programmes.

Additionally, because the programmes all reside within the application area of the present invention, the wasted resources associated with creating a separate directory for each application/programme are avoided.

The present invention advantageously allows the application area 4 to be utilised by the system of the preferred embodiment on an "as required" basis. For example, if only one application is being run on a particular data carrying device, for example ticketing, then substantially the whole of the application area is available for storage of data relating to ticketing programmes. This compares favourably to the prior art where predefined segments of memory space, having a fixed size, are provided for each application supported by the prior art system. Hence, memory space is allocated regardless of whether it is required by a particular data carrying device.

The static area 2 is configured to include data indicative of any of the following:
an entity responsible for issuing the data carrying device;
an issuing country;
a card group;
a unique device identification number;
whether the device is personalised;
a date and time at which the device was initialised;
the location of said application area;
a size of said application area;
a device model; and/or
an entity responsible for initialising the data carrying device.

The data indicative of whether the device is personalised may be used, for example, in smart-cards, to indicate whether the name of the card holder is embossed thereon.

The static area 2 is configurable as either random access memory, or read only memory, by means of setting access control rules, for example an access control block (not shown). In the preferred embodiment, the static area 2 is configured as random access memory prior to an initialisation process whereby the above data is written to the static area. After the initialisation process, the static area is configured as read only memory so as to prevent inadvertent or unauthorised changes to the data.

The provision of the data in the static area 2 enables the allocation of memory space 1 on a data carrying device to be individually tailored for each device at the time of initialisation. This enables far greater flexibility than the prior art systems which require allocation of space to be fixed for the effective lifetime of the system. Hence, the present invention allows the values in the static area 2 to be changed for each newly initialised device so as to readily allow for the development of new products having different space requirements and yet still operating within the same system.

The location of the static area 2 is fixed as it effectively controls access to all other areas on the data carrying device. In the preferred embodiment, the static area is placed in the first available memory location of the device.

The index area 3 is configured to hold a plurality of index entries 6 representing numbers, each of which uniquely correlate with applications residing within the application area 4 according to a predetermined correlation scheme. In the scheme of the preferred embodiment, the number may range between 0 and 65535. For example, 00100 corresponds to an application holding device variables. Numbers in the range of 10,000 to 19,999 are reserved for loyalty program applications. The range 20,000 to 29,999 is reserved for pass applications such as membership, access control and tickets. 30,000 to 39,999 is reserved for electronic purse applications and 40,000 to 49,999 for account applications.

As will be appreciated by those skilled in the art, the correlation scheme can be tailored so as to uniquely match any number with a specific application. In some embodiments, an order of location of the index entry numbers 6 corresponds respectively with an order of location of the applications.

In the preferred embodiment, the application area is segmented into units 5 and the index area 3 is configured to hold a plurality of index entries 6 representing numbers, each of which uniquely correlate with the programmes written onto the units according to the predetermined correlation scheme. In this embodiment, an order of location of said numbers corresponds respectively with an order of location of said units 5. This relationship is shown in figure 2 whereby index area entry n defines the contents of the application and programme in the corresponding application unit n.

Each index entry is initially set to zero during the initialisation process so as to indicate that no programmes have yet been stored in the application area. As programmes are subsequently written to the application area, the index entries are correspondingly updated.

If necessary, some of the programmes may expire once predetermined expiry criteria are fulfilled. For example, a programme may expire once a certain date is reached or once a certain number of transactions have been completed. The units 5 occupied by an expired programme are available for the writing of a replacement programme. Similarly, the index entries 6 corresponding to said expired units 5 are available for the writing of replacement index entries 6 corresponding to said replacement programme. In a preferred embodiment, the units 5 occupied by an expired programme are only available for the writing of the replacement programme if all index entries 6 indicative of the programmes in the units 5 are non-zero. This ensures that all free units 5 are utilised before data in an expired unit is over-written.

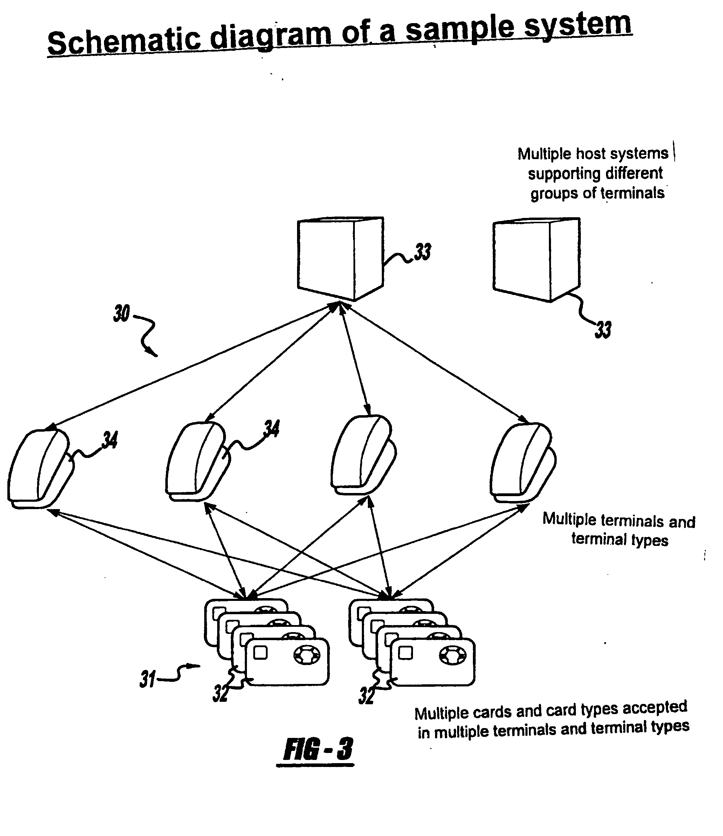

As shown in Figure 3, a preferred embodiment of a system 30 for manipulating data on a plurality of data carrying devices 31, preferably smart-cards 32, includes at least one host 33 and one or a plurality of terminals 34, each being adapted to interact with said data carrying devices 31. In particular, the terminals 34 are adapted to read from the static area 2, index area 3 and application area 4 of each data carrying device 31 and to write to the index areas 3 and the application areas 4.

The terminals 34 and the host 33 are adapted to communicate parameter files (not shown) therebetween. Such communication may be by means of an on-line connection between the host 33 and each of the terminals 34. Some alternative embodiments of the invention accomplish communication between the host 33 and the terminals 34 by means of a portable data carrying device (not shown). The latter form of communication is especially suited for terminals 34 located in remote areas where on-line connection may not be feasible, or for example, in an automated vending machine for which the establishment of an on-line connection would not be financially viable.

In another preferred embodiment (not illustrated) the terminal software runs at an internet web server as a "virtual terminal" which processes transactions performed at the merchant web site. This virtual terminal communicates to the host in the same manner as the real-world terminals.

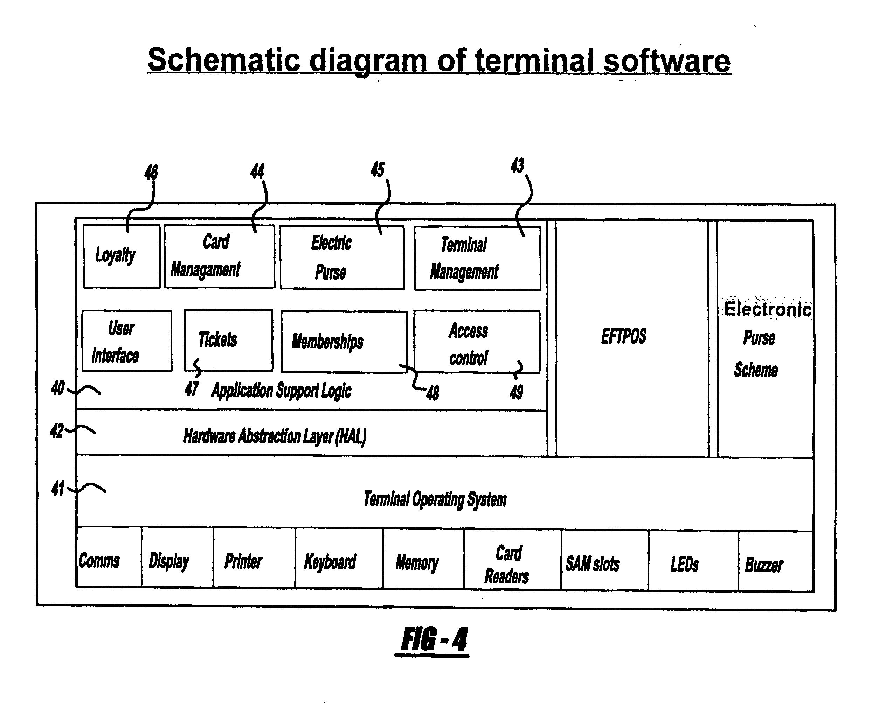

At least some of the terminals 34 include functionally identical software 40 (labelled "Application Support Logic" in figure 4) being activatable and configurable in response to said parameter files so as to initiate and/or update data on said data carrying devices 31. In this document, the scope of the term "functionally identical" includes software comprising or formed from differing source codes but achieving similar or preferably identical overall functionality.

The use in terminals 34 of software being activatable and configurable in response to parameter files sent from a host 33 enables the system 30 of the preferred embodiment to offer a far greater range of functions than has hitherto been available in smart-card systems. Depending upon the number of applications and programmes supported by the system, and the number of ways in which each application can be implemented to form a programme, the system can be configured to run thousands of programmes relating to large numbers of applications. For example, the preferred embodiment can be configured to support from less than 5 to 50 or more different applications, each of which can result in a large number of different programmes, the exact details of which will vary depending upon the contents of the parameter files communicated between the terminals and the host. Hence the system of the present invention provides for a huge range of options. For example the preferred embodiment provides capability for over 36 different concurrent programmes running on one data carrying device having a memory storage capacity of 1K. Additionally, over 65,000 different concurrent programmes can be supported by one host.

The amount of data communicated in the parameter files is comparatively small in relation to the size of the software 40 required to provide the various applications and programmes implemented by smart-cards. Hence, limiting communication predominantly to parameter files helps to minimise the time, resources and expense associated with communications between the terminals 34 and the host 33.

The host 33 is configured to receive and store the data sent from all terminals 34 so that a central record of all interactions between all terminals 34 and data carrying devices 31 may be maintained. If terminals 34 send batch data to the host 33 on a daily basis, then the records kept on the host should be current for all transactions carried out up to, and including, the preceding day.

The system 30 of the preferred embodiment is designed to work in conjunction with many of the pre-existing -card and terminal systems. Hence, the system 30 must run on many different terminals 34, often having different operating systems 41. For this reason, the software 40 in each of the terminals 34 includes at least one of the aforesaid many possible operating systems 41, an application module 40 common to all terminals 34 in the system 30 and a hardware abstraction layer 42 being adapted to integrate said operating system 41 and said application module 40. This structure is shown schematically in Figure 4. In this manner, the core application module 40 can be copied in a substantially identical form to all terminals 34, each of which also include a hardware abstraction layer 42 specifically tailored to integrate the application module 40 with the particular operating system 41 of the terminal 34. This arrangement advantageously allows the software 40 to be readily implemented upon many differing types of pre-existing terminal 34 in an efficient manner.

The application module 40 common to all terminals 34 includes the full variety of applications supported by the system. Some or all of the applications are dormant until such time as a parameter file is received by the terminal 34 from the host 33 so as to initiate and subsequently modify applications and/or programmes as desired. As presently contemplated. the preferred embodiment includes the following applications:
Terminal Management 43;
Device Management 44;
Electronic Purse and other payment systems 45;
Loyalty and Incentive Programs 46;
Electronic Tickets 47;
Memberships and 48;
Access Control and Authentication 49.

The terminal management application 43 provides a means whereby field service technicians can manipulate various operating parameters, for example:
a merchant identification number;
a terminal identification number;
a host phone number and associated parameters.
The terminal management application 43 also provides for data storage means adapted to record details of all interactions between the terminal 34 and the data carrying devices 31, said details being stored in a current transaction log file. The terminals 34 further include means for batch communication of data stored in the data storage means to said host 33. The use of batch communication is preferable to communicating with the host 33 during every interaction between a terminal 34 and a data carrying device 31 because the interactions can thereby proceed far more swiftly. Additionally, the use of batch processing reduces the overall communication costs. In the preferred embodiment, the terminals 34 communicate with the host 33 on a daily basis in a process referred to as "settlement". The settling process involves the terminal dialling a preset phone number and entering into a communications dialogue with the host. Once authenticated, the terminal uploads its current transaction log file and downloads a new parameter file, if necessary. The terminal management application 43 will preferably provide means whereby the settlement process is automatically initiated by the terminal 34 at a predetermined time each day.

The card management application 44 checks every card that is presented to a terminal and will activate other applications or programmes only when the card management application 44 determines that the data carrying device 31 presented to the terminal 34 contains a legitimate file structure, that is, a file structure having a static area 2, index area 3 and application area 4 as described above. The card management application 44 will determine a card group into which the data carrying device 31 falls. The card groups may be differentiated based upon criteria such as: country code; issuer ID; physical appearance, target market for the device and device group. The card group can be used to determine the rules of transaction between the terminal 34 and the device 31. The preferred embodiment of the present invention can advantageously interact with devices 31 falling within different card groups and terminal groups. Additionally, the rules which define the transactions between the terminal 34 and a given card group can be readily altered by exchanging parameter files between the host 33 and the terminal 34. In some embodiments, the rules of transaction relating to a given card group or a given programme are written within programmes stored on the data carrying device 31.

The card management application 44 also controls the expiry and renewal of the data carrying device 31 based upon parameters received from the host 33 on a card group basis. Another parameter received from the host 33 defines a reminder period for renewals, for example one month. In this case, device renewal may occur only during the reminder period, being the calendar month leading up to the expiry date. During the reminder period the device holder is notified of impending device expiry by messages that are included at the bottom of transaction receipts. The card management application 44 keeps track of a status of the device 31, for example either "initialised", "issued" or "blocked". The host 33 maintains a list of blocked devices 31 that it sends to terminals 34, by means of parameter files, on a regular basis. When a terminal 34 encounters a device 31 that is included on the blocked list, the terminal 34 changes the status of the device 31 to "blocked".

The electronic purse application 45 is responsible for reading and writing electronic representations of money to and from the data carrying devices 31 during transactions.

The loyalty programme application 46 is responsible for reading and writing loyalty points to and from the data carrying device 31. This application implements rules whereby loyalty points accumulate on the basis of predefined activities, such as purchase amounts. purchase frequencies, data carrying device renewal etc. Such points can be implemented in schemes by merchants whereby accumulation of points beyond a predetermined threshold results in some reward for the device holder such as a gift or discount.

The electronic ticket application 47 allows the data carrying devices 31 to support ticket functionality. For example, tickets to use a bus service could be purchased from a terminal owned by a retail merchant, with the necessary ticket data being written to the data carrying device 31. Terminals 34 are provided at entry or exit points to the bus service and the ticket data on the device 31 is updated as necessary as the device 31 passes through the terminals 34.

The membership application 48 and access control application 49 are functionally similar to the electronic ticket application 47.

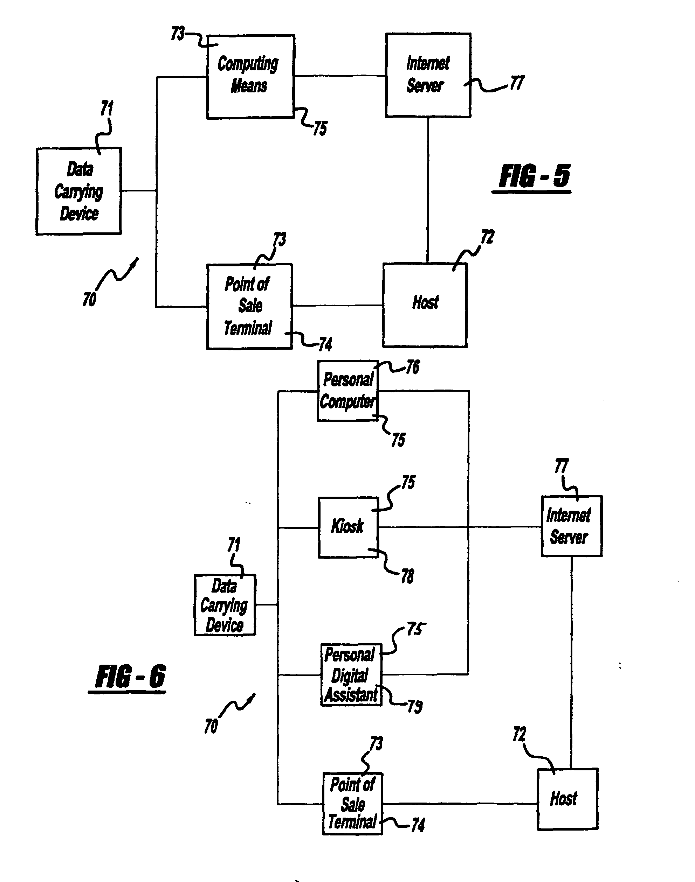

As shown best in figure 5, the improved system 70 for manipulating data on a plurality of data carrying devices 71 includes at least one host 72 and a plurality of terminals 73. Each terminal is adapted to interact with the data carrying devices 71 and to communicate with said host 72. A first sub-set of the terminals are point of sale terminals 74 which each operate in the manner described with reference to figure 3. A second sub-set of the terminals 73 are computing means 75 capable of interfacing to the internet for communication with an internet server 77, which, in turn, is connected for communication with the host 72.

This arrangement allows a user to conduct transactions with a single data carrying device 71 via either one of the POS terminals 74 or an internet server 77.

As best shown in figure 6, the computing means 75 may be in the form of a personal computer 76 having a modem (not illustrated) allowing for connection to the internet server 77. The personal computer 76 is adapted to read from, and write to, the data carrying devices 71. This may be achieved in a variety of manners, for example, some embodiments of the personal computers 76 are provided with in-built card reading and writing apparatus (not illustrated), in particular the keyboards (not illustrated) of some newer personal computers 76 include in-built smart card readers/writers. Older style personal computers 76 which do not include such in-built apparatus may have separate card reading and writing apparatus plugged into a port (not illustrated), for example a serial port. Alternatively, a smart card reader/writer plug-in module such as the SmartDisk Smarty reader (not illustrated), may be used to allow a 3.5 inch floppy drive to function as a smart card reader/writer.

Any other computing means 75 having the capacity to communicate digital information via an internet server 77, for example, electronic information kiosks 78 or personal digital assistants 79 such as palmtop and handheld computers, can be used in the preferred embodiment as an interface to the internet.

As explained above, the standard (non-internet capable) system 30 illustrated in figure 3 includes a number of POS terminals 34, each of which include terminal software which is activatable and configurable in response to parameter files which pass between the host 33 and the terminals 34. In the intemet-capable system 70 of the present invention, the POS terminals operate in this standard fashion. However, in the sub-set of terminals 75 which are adapted to communicate with the host 72 via an internet server 77, the "terminal" software resides on the internet server. Hence the parameter files (not illustrated) which define the various programmes that are available at each terminal 74 or internet server 77 are initiated at the host 72 and downloaded to the POS terminals 74 and the internet servers 77. Additionally, details of all transactions are uploaded from the POS terminals 74 and the internet servers 77 to the host 72 on a daily basis.

To help address concerns regarding the security of information conveyed upon the internet, the system 70 of the present invention may include an electronic signature application stored upon the data carrying devices 71 which can be used for identity verification.

In the preferred embodiment, each data carrying device has a memory space 1 as described above with reference to figures 1 and 2 having a static area 2, an index area 3 and an application area 4. Additionally, each data carrying device preferably has one or more programs associated with the following applications: an electronic purse or other payment system; loyalty; electronic tickets; memberships; and/or access control.

A typical POS transaction involving a loyalty reward using the system 70 of the present invention with a data carrying device having payment system and loyalty programs would proceed as follows:
- a consumer decides to make a purchase at a retail outlet;
- the data carrying device 71 is offered to the merchant and placed into a POS terminal 74;
- the appropriate deduction is made from the payment mechanism;
- the loyalty programme on the data carrying device 71 is updated as necessary; and
- the details of the transaction are logged for later communicated to the host.

In contrast, a typical internet transaction involving a payment and a loyalty reward using the preferred method of the present invention on a data carrying device having both a payment system program and a loyalty program would proceed as follows:
- the consumer places a data carrying device 71 into the reader/writer of their computing means;
- the consumer selects the merchant's internet site, for example a home page, using computing means 75 such as a personal computer 76, kiosk 78 or personal digital assistant 79;
- if the computing means 75 does not already have transaction enabling software, the consumer is given the opportunity to download the software across the internet, the software may then be stored on the computing means 75. At subsequent occasions, the consumer can select the transaction enabling software which was previously stored on their computing means 75;
- the consumer uses the computing means 75 to select the item or service which they wish to purchase;
- in some embodiments the digital signature on the data carrying device 71 provides secure identification of the consumer;
- terminal software installed upon the internet server 77 checks whether the payment program has an amount of electronic representation of money required for the proposed transaction and whether a loyalty reward is due in return for the proposed transaction and
- updated data is written to the data carrying device 71 as appropriate for the transaction, for example the required amount of money is deducted from the payment system program to pay for the good or service and/or a loyalty reward is written onto the loyalty programme of the data carrying device 71.

The data in the loyalty reward program and the payment system program is therefore immediately updated in the data carrying device after the above transaction. Hence, if sufficient loyalty points are accrued, a loyalty reward may be immediately available to the consumer which could then be redeemed regardless of whether the next transaction is made via a POS terminal 74 or another internet purchase.

It will be appreciated by those skilled in the art that the term "transaction", as used in this specification, is not limited to "financial transactions" (in the sense that money, or an electronic representation thereof, is exchanged). For example, a user with sufficient loyalty points accumulated on their data carrying device 71 may use their computing means 75 to order their loyalty reward over the internet, without any currency changing hands.

The preferred embodiment allows a consumer to use computing means 75 to access an enquiry server on the internet. This enables consumers to read sufficient information from their data carrying device 71 to determine the current status of at least some of the various programmes on the device. For example, a consumer may use the preferred embodiment to determine how much money is held in electronic purse programmes, how many tickets remain in electronic ticketing programmes, what entitlements they have accrued in loyalty programmes or what memberships are held on the device 71.

This versatility allows the preferred embodiment 70 to provide a highly accessible and convenient system on which a consumer can trade seamlessly with a business via either a point of sale terminal or the internet. For example, the system of the present invention allows a consumer to make the following types of transactions, in quick succession if necessary:
- purchase a book in a bookshop, using the electronic purse application of the preferred embodiment in the point of sale terminal 74 at the shop, have a loyalty reward consisting of a discount applicable to the next purchase written to the data carrying device 71, then buy a book over the internet with the benefit of a discount due to the loyalty reward;
- purchase a monthly train ticket at a train station, and then renew the ticket over the internet; and
- reload a pre-paid telephone card over the internet, and receive a one-week health club membership as a cross-promotional loyalty reward.

The information carried on the data carrying device 71 eliminates the requirement of the prior art for the trader's separate systems to be accessed and reconciled before the most recent status can be identified and the appropriate action taken. Advantageously, the information stored in the host 72, which is privy to transactions carried out on both the POS terminals 74, and via the internet, provides the merchant with a single point of management. This allows the merchant to manage and analyse both internet and POS transactions in an integrated fashion.

Although the invention has been described with reference to specific examples, it will be appreciated by those skilled in the art that the invention may be embodied in many other forms.

## Claims

1. A system (30, 70) for manipulating data on a plurality of data carrying devices (31, 71), said system (30, 70) including at least one host (33, 72), an internet server (77) and a plurality of terminals (34, 73), each terminal (34, 73) being adapted to interact with said data carrying devices (31, 71) and to communicate with said host (33, 72), **characterized in that**
a first sub-set of said terminals (34, 73) are point of sale terminals (74) and a second sub-set of said terminals are computing means (75) interfacing to the internet for communication with said internet server (77) which in turn is connected for communication with said host (33, 72), said computing means (75) reading from, and writing to, said data carrying devices (31, 71), wherein the point of sale terminals (34, 74) and the computing means (75) update data on the data carrying devices (31, 71).

2. A system (30, 70) for manipulating data on a plurality of data carrying devices (31, 71) according to claim 1 wherein the computing means (75) are in the form of any one or more of the following: personal computers; personal digital assistants; mobile phones; or electronic information kiosks.

3. A system (30, 70) for manipulating data on a plurality of data carrying devices (31, 71) according to claim 1 or 2 wherein terminal software (40) is installed upon said internet server (77), said terminal software (40) being activatable and configurable in response to parameter files sent from the host (33, 72).

4. A system (30, 70) for manipulating data on a plurality of data carrying devices (31, 71) according to claim 3 wherein said terminal software (40) includes enquiry software to enable a user to obtain from their computing means information indicative of a state of their data carrying device (31, 71).

5. A system (30, 70) for manipulating data on a plurality of data carrying devices (31, 71) according to claim 4 wherein said information is indicative of any combination of the following:
an amount of money associated with an electronic purse programme; an amount of loyalty credit associated with a loyalty programme; tickets held in a ticketing programme; or memberships held in a membership programme.

6. A system (30, 70) for manipulating data on a plurality of data carrying devices (31, 71) according to any one of the above claims wherein the data carrying devices (31, 71) include an electronic signature which can be used to verify the identity of a device owner.

7. A method for manipulating data on a data carrying device (31, 71) which device includes one or more programs for a variety of applications, said method **characterized by** the steps of:
a) inserting a data carrying device (31, 71) into one of a computing means (75) and a point of sale terminal (34, 74) adapted to read from and write to said data carrying devices (31, 71),
said computing means (75) being adapted to interface to the internet for communication with an internet server (77) which, in turn, is connected for communication with a host (33, 72);
said point of sale terminal (34, 74) adapted to communicate with said host (33, 72);
performing steps b) through e) whenever said data carrying device (31, 71) is inserted in said computing means (75), or proceeding to step f) whenever said data carrying device (31, 71) is inserted in said point of sale terminal;
b) using said computing means (75) to establish a connection with a merchant internet site;
c) if transaction enabling software is not already stored on the computing means, downloading said software across the internet;
d) using said computing means to select a good or service offered by said merchant; and
e) using said computing means to write updated data to at least one of said programs as appropriate for said transaction, thereby completing said method;
f) using said host (33, 72) and said point of sale terminal (34, 74) to write updated data to at least one of said programs as appropriate for point of sale transactions.

8. A method for manipulating data on a plurality of data carrying devices (31, 71) according to claim 7 wherein terminal software (40) is installed upon said internet server (77), said terminal software (40) being activatable and configurable in response to parameter files sent from the host (72).

9. A method for manipulating data on a plurality of data carrying devices (31, 71) according to claim 8, when used with data carrying devices having loyalty programs, wherein step e) includes the following sub-steps:
e1) using said terminal software (40) installed upon said internet server (77) to check whether a loyalty reward is due in return for purchase of said good or service;
e2) updating loyalty data in a loyalty programme on said data carrying device (31, 71) if a loyalty reward is due.

10. A method for manipulating data on a plurality of data carrying devices (31, 71) according to any one of claims 7 to 9, further including the step of: accessing an electronic signature from the data carrying device prior to performing step d) so as to verify the identity of a device owner.

## Patentansprüche

1. System (30, 70) zur Handhabung von Daten auf mehreren Datenträgervorrichtungen (31, 71), wobei das System (30, 70) wenigstens einen Host (33, 72), einen Internet-Server (77) und mehrere Endgeräte (34, 73), die dafür konfiguriert sind, mit den Datenträgervorrichtungen (31, 71) zu interagieren und mit dem Host (33, 72) zu kommunizieren, umfaßt, **dadurch gekennzeichnet, daß**
eine erste Teilmenge der Endgeräte (34, 73) Verkaufsstellen-Endgeräte (74) sind und eine zweite Teilmenge der Endgeräte Rechnermittel (75) sind, die eine Schnittstelle zum Internet aufweisen, um mit dem Internet-Server (77) zu kommunizieren, der seinerseits so verbunden ist, daß er mit dem Host (33, 72) kommunizieren kann, wobei die Rechnermittel (75) die Datenträgervorrichtungen (31, 71) lesen und beschreiben, wobei die Verkaufsstellen-Endgeräte (34, 74) und die Rechnermittel (75) Daten auf den Datenträgervorrichtungen (31, 71) aktualisieren.

2. System (30, 70) zur Handhabung von Daten auf mehreren Datenträgervorrichtungen (31, 71) nach Anspruch 1, wobei es sich bei den Rechnermitteln (75) um eines oder mehrere der folgenden Geräte handelt: Personalcomputer, persönliche digitale Assistenten (PDA), Mobiltelefone oder elektronische Informationskioske.

3. System (30, 70) zur Handhabung von Daten auf mehreren Datenträgervorrichtungen (31, 71) nach Anspruch 1 oder 2, wobei auf dem Internet-Server (77) Endgeräte-Software (40) installiert ist, wobei die Endgeräte-Software (40) in Reaktion auf Parameterdateien, die von dem Host (33, 72) gesandt werden, aktiviert und konfiguriert werden kann.

4. System (30, 70) zur Handhabung von Daten auf mehreren Datenträgervorrichtungen (31, 71) nach Anspruch 3, wobei die Endgeräte-Software (40) Abfrage-Software enthält, die es einem Benutzer ermöglicht, von ihrem Rechnermittel Informationen zu erhalten, die einen Status ihrer Datenträgervorrichtungen (31, 71) anzeigen.

5. System (30, 70) zur Handhabung von Daten auf mehreren Datenträgervorrichtungen (31, 71) nach Anspruch 4, wobei die Informationen eine beliebige Kombination der folgenden Dinge anzeigen:
einen Geldbetrag in Verbindung mit einem elektronischen Abrechnungsprogramm; einen Treuegutschriftbetrag in Verbindung mit einem Kundentreueprogramm; Tickets, die in einem Ticketausgabeprogramm gespeichert sind; oder Mitgliedschaften, die in einem Mitgliedschaftsprogramm gespeichert sind.

6. System (30, 70) zur Handhabung von Daten auf mehreren Datenträgervorrichtungen (31, 71) nach einem der vorangehenden Ansprüche, wobei die Datenträgervorrichtungen (31, 71) eine elektronische Signatur enthalten, die zum Verifizieren der Identität eines Eigentümers einer Datenträgervorrichtung verwendet werden kann.

7. Verfahren zur Handhabung von Daten auf einer Datenträgervorrichtung (31, 71), wobei diese Vorrichtung ein oder mehrere Programme für eine Vielzahl von Anwendungen enthält, wobei das Verfahren durch folgende Schritte gekennzeichnet ist:
a) Einlegen einer Datenträgervorrichtung (31, 71) in ein Rechnermittel (75) oder ein Verkaufsstellen-Endgerät (34, 74), das dafür konfiguriert ist, die Datenträgervorrichtungen (31, 71) zu lesen und zu beschreiben,
wobei das Rechnermittel (75) dafür konfiguriert ist, über eine Schnittstelle eine Verbindung zum Internet aufzunehmen, um mit einem Internet-Server (77) zu kommunizieren, der seinerseits so verbunden ist, daß er mit einem Host (33, 72) kommunizieren kann;
wobei das Verkaufsstellen-Endgerät (34, 74) dafür konfiguriert ist, mit dem Host (33, 72) zu kommunizieren;
Ausführen der Schritte b) bis e), wann immer die Datenträgervorrichtung (31, 71) in das Rechnermittel (75) eingelegt wird, oder Weitergehen zu Schritt f), wann immer die Datenträgervorrichtung (31, 71) in das Verkaufsstellen-Endgerät eingelegt wird;
b) Verwenden des Rechnermittels (75) zum Herstellen einer Verbindung mit einer Händler-Internetsite;
c) falls noch keine transaktionsermöglichende Software auf dem Rechnermittel gespeichert ist, Herunterladen der Software über das Internet;
d) Verwenden des Rechnermittels zum Auswählen einer von dem Händler angebotenen Ware oder Dienstleistung; und
e) Verwenden des Rechnermittels zum Schreiben von aktualisierten Daten in wenigstens eines der Programme, so wie es für die jeweilige Transaktion vorgesehen ist, womit das Verfahren abgeschlossen wird;
f) Verwenden des Host (33, 72) und des Verkaufsstellen-Endgerätes (34, 74) zum Schreiben von aktualisierten Daten in wenigstens eines der Programme, so wie es für Verkaufsstellentransaktionen vorgesehen ist.

8. Verfahren zur Handhabung von Daten auf mehreren Datenträgervorrichtungen (31, 71) nach Anspruch 7, wobei auf dem Internet-Server (77) Endgeräte-Software (40) installiert ist, wobei die Endgeräte-Software (40) in Reaktion auf Parameterdateien, die von dem Host (72) gesandt werden, aktiviert und konfiguriert werden kann.

9. Verfahren zur Handhabung von Daten auf mehreren Datenträgervorrichtungen (31, 71) nach Anspruch 8, wenn es mit Datenträgervorrichtungen verwendet wird, auf denen sich Kundentreueprogramme befinden, wobei Schritt e) die folgenden Teilschritte enthält:
e1) Verwenden der auf dem Internet-Server (77) installierten Endgeräte-Software (40), um zu überprüfen, ob als Gegenleistung für den Kauf der Ware oder Dienstleistung eine Treuebelohnung fällig ist;
e2) Aktualisieren von Kundentreuedaten in einem Kundentreueprogramm auf der Datenträgervorrichtung (31, 71), wenn eine Treuebelohnung fällig ist.

10. Verfahren zur Handhabung von Daten auf mehreren Datenträgervorrichtungen (31, 71) nach einem der Ansprüche 7 bis 9, das weiterhin folgenden Schritt enthält: Zugreifen auf eine elektronische Signatur von der Datenträgervorrichtung vor dem Ausführen von Schritt d), um die Identität eines Eigentümers einer Datenträgervorrichtung zu verifizieren.

## Revendications

1. Un système (30, 70) pour manipuler des données sur une multiplicité de dispositifs porteurs de données (31, 71), ce système (30, 70) incluant au moins un appareil hôte (33, 72), un serveur Internet (77) et une multiplicité de terminaux (34, 73), chaque terminal (34, 73) étant adapté pour interagir avec les dispositifs porteurs de données (31, 71) et pour communiquer avec l'appareil hôte (33, 72), **caractérisé en ce que**
un premier sous-ensemble des terminaux (34, 73) sont des terminaux de point de vente (74) et un second sous-ensemble des terminaux sont des moyens de calcul (75) assurant l'interface avec l'Internet pour la communication avec le serveur Internet (77), qui est connecté à son tour pour la communication avec l'appareil hôte (33, 72), ces moyens de calcul (75) lisant et écrivant dans les dispositifs porteurs de données (31, 71), les terminaux de point de vente (34, 74) et les moyens de calcul (75) actualisant des données sur les dispositifs porteurs de données (31, 71).

2. Un système (30, 70) pour manipuler des données sur une multiplicité de dispositifs porteurs de données (31, 71) selon la revendication 1, dans lequel les moyens de calcul (75) sont sous la forme de l'un quelconque ou de plusieurs des appareils suivants : ordinateurs personnels; assistants numériques personnels; téléphones mobiles; ou kiosques d'information électroniques.

3. Un système (30, 70) pour manipuler des données sur une multiplicité de dispositifs porteurs de données (31, 71) selon la revendication 1 ou 2, dans lequel un logiciel de terminal (40) est installé sur le serveur Internet (77), ce logiciel de terminal (40) pouvant être activé et configuré en réponse à des fichiers de paramètres envoyés par l'appareil hôte (33, 72).

4. Un système (30, 70) pour manipuler des données sur une multiplicité de dispositifs porteurs de données (31, 71) selon la revendication 3, dans lequel le logiciel de terminal (40) comprend un logiciel d'interrogation pour permettre à un utilisateur d'obtenir à partir de son moyen de calcul de l'information indiquant un état de son dispositif porteur de données (31, 71).

5. Un système (30, 70) pour manipuler des données sur une multiplicité de dispositifs porteurs de données (31, 71) selon la revendication 4, dans lequel ladite information indique une combinaison quelconque de ce qui suit :
un montant monétaire associé à un programme de porte-monnaie électronique; un montant de crédit de fidélité associé à un programme de fidélité; des billets conservés dans un programme d'achat de billets; ou des données de sociétariat conservées dans un programme de sociétariat.

6. Un système (30, 70) pour manipuler des données sur une multiplicité de dispositifs porteurs de données (31, 71) selon l'une quelconque des revendications précédentes, dans lequel les dispositifs porteurs de données (31, 71) incluent une signature électronique qui peut être utilisée pour vérifier l'identité d'un possesseur de dispositif.

7. Un procédé pour manipuler des données sur un dispositif porteur de données (31, 71), ce dispositif incluant un ou plusieurs programmes pour une variété d'applications, ce procédé étant **caractérisé par** les étapes suivantes :
a) on insère un dispositif porteur de données (31, 71) dans l'un d'un moyen de calcul (75) et d'un terminal de point de vente (34, 74) adaptés pour lire et écrire dans les dispositifs porteurs de données (31, 71),
le moyen de calcul (75) étant adapté pour assurer l'interface avec l'Internet pour la communication avec un serveur Internet (77) qui est connecté à son tour pour la communication avec un appareil hôte (33, 72);
le terminal de point de vente (34, 74) étant adapté pour communiquer avec l'appareil hôte (33, 72);
on accomplit les étapes b) à e) chaque fois que le dispositif porteur de données (31, 71) est inséré dans le moyen de calcul (75), ou on passe à l'étape f) chaque fois que le dispositif porteur de données (31, 71) est inséré dans le terminal de point de vente;
b) on utilise le moyen de calcul (75) pour établir une connexion avec un site Internet de commerçant;
c) si un logiciel permettant des transactions n'est pas déjà stocké sur le moyen de calcul, on télécharge ce logiciel par l'Internet;
d) on utilise le moyen de calcul pour sélectionner une marchandise ou un service proposé par ledit commerçant; et
e) on utilise le moyen de calcul pour écrire des données actualisées dans au moins un desdits programmes, de la manière appropriée pour la transaction, ce qui achève l'accomplissement de ce procédé;
f) on utilise l'appareil hôte (33, 72) et le terminal de point de vente (34, 74) pour écrire des données actualisées dans au moins un desdits programmes, de la manière appropriée pour des transactions de point de vente.

8. Un procédé pour manipuler des données sur une multiplicité de dispositifs porteurs de données (31, 71) selon la revendication 7, dans lequel un logiciel de terminal (40) est installé sur le serveur Internet (77), ce logiciel de terminal (40) pouvant être activé et configuré en réponse à des fichiers de paramètres envoyés par l'appareil hôte (72).

9. Un procédé pour manipuler des données sur une multiplicité de dispositifs porteurs de données (31, 71) selon la revendication 8, lorsqu'il est utilisé avec des dispositifs porteurs de données ayant des programmes de fidélité, dans lequel l'étape e) comprend les sous-étapes suivantes :
e1) on utilise le logiciel de terminal (40) installé sur le serveur Internet (77) pour contrôler si une récompense de fidélité doit être fournie en retour pour l'achat de la marchandise ou du service;
e2) on actualise des données de fidélité dans un programme de fidélité sur le dispositif porteur de données (31, 71) si une récompense de fidélité doit être fournie.

10. Un procédé pour manipuler des données sur une multiplicité de dispositifs porteurs de données (31, 71) selon l'une quelconque des revendications 7 à 9, incluant en outre l'étape suivante : on accède à une signature électronique sur le dispositif porteur de données avant d'accomplir l'étape d), afin de vérifier l'identité d'un possesseur de dispositif.
